# EUROPEAN PATENT APPLICATION

(11) **EP 4 086 726 A1**
(43) Date of publication of application: **09.11.2022**
(21) Application number: 21172386.1
(22) Date of filing: 06.05.2021
(51) Int. Cl.: G06F 1/16, H04L 12/28, H04M 1/72409

(54) **ELECTRONIC DEVICE FOR PROVIDING INFORMATION REGARDING AN APPLIANCE**

(71) Applicant: BSH Hausgeräte GmbH, 81739 München (DE)
(72) Inventor: Puls, Fabian, 83714 Miesbach (DE); Sagoo, Kiran Pal, 82256 Fürstenfeldbruck (DE)

(57) **Abstract**

An electronic device (200) configured to enhance a user interaction with an appliance (311) is described. The electronic device (200) is configured to detect a trigger event (331) at the appliance (311), indicating that a user intends to obtain information (333) regarding a function of the appliance (311). Furthermore, the electronic device (200) is configured to cause the information (333) regarding the function of the appliance (311) to be output via a user interface separate from the appliance (311), in particular via a user interface of the electronic device (200) or of a docking station (100) that the electronic device (200) is docked to.

## Description

The present document relates to an electronic device and/or a docking station, which may be used within a household, notably within a kitchen, to provide support regarding the user interaction with one or more household appliances.

An electronic device and/or a docking station may be used within a household, notably within a kitchen, to provide support for a household task, such as cooking, to a user of the electronic device. The user may use the electronic device and/or the docking station for playing back an audio signal (e.g. music or audio instructions for a recipe or an answer by a voice assistant).

A household typically comprises different household appliances, such as a dishwasher, an oven, a washing machine, etc. The different household appliances may have different functions which may be controlled using user interfaces of the respective household appliances. A user may not be aware of the various different possibilities for controlling the various different household appliances.

The present document addresses the technical problem of increasing the comfort of use of devices, such as a docking station and/or a household appliance. The technical problem is solved by the independent claims. Preferred examples are described in the dependent claims.

According to an aspect, an electronic device, e.g. a smartphone or a tablet PC, configured to enhance a user interaction with an appliance is described. The appliance may be a household appliance such as a dishwasher, a washing machine, an oven, a cooking machine, etc. The electronic device may be configured to detect a trigger event at the appliance, indicating that a user intends to obtain information regarding a function of the appliance. The trigger event may be caused by the user at the appliance. The appliance may comprise an (physical and/or mechanical) input element (e.g. as part of the user interface of the appliance). The trigger event may comprise an actuation of the input element by the user.

The electronic device may further be configured to cause the information regarding the function of the appliance to be output via a user interface separate from the appliance. In particular, a user interface of the electronic device or of a docking station that the electronic device is docked to may be used for outputting the information. The information may comprise information which is related to a function of the appliance that is controllable using the input element of the appliance, which has been actuated in the context of the trigger event.

Hence, an electronic device is described, which allows a user to receive information about one or more functions of an appliance, when interacting with the appliance. By way of example, the user may cause excerpts of a user manual of the appliance to be output by causing one or more trigger events at the appliance. As a result of this, a comfortable user interaction with an appliance is provided.

The electronic device may be configured to determine whether or not the electronic device is docked to a docking station. The docking station may act as a control and/or information hub within the household of the appliance. Furthermore, the electronic device may be configured to cause the information regarding the function of the appliance to be output, if, in particular only if, it is determined that the electronic device is docked to the docking station. By doing this, the comfort of use and/or the reliability of user interaction with an appliance may be improved further.

The electronic device may be configured to cause the information regarding the function of the appliance to be output using a loudspeaker of the docking station that the electronic device is docked to, in particular using text-to-speech synthesis. By doing this, the comfort of user interaction with the appliance can be further improved.

The electronic device may be configured to download the information regarding the function of the appliance from a backend server, in particular from a backend server of a manufacturer of the appliance. As a result of this, the quality of the information may be improved.

The electronic device may be configured to enable the user to define one or more different trigger events, subject to which information regarding one or more different functions of the appliance is output. The trigger events may comprise different actuations of one or more input elements of the appliance. The different trigger events may be associated with different functions of the appliance. By allowing a user to define trigger events, the comfort of user interaction with the appliance may be further improved.

According to a further aspect, a control unit for a docking station configured to dock an electronic device, e.g. a smartphone or a tablet PC, having a touch screen is described. The control unit may be configured to determine that the docking station has docked an electronic device. In particular, it may be determined that an electronic device is placed within the holder of the docking station.

The control unit is further configured to determine that a user intends to control the docking station. The docking station may comprise a gesture sensor which is configured to capture measurement data regarding the presence or the absence of a user in front of the docking station. The measurement data may indicate a particular gesture performed by the user. The control unit may be configured to determine that a user intends to control the docking station based on the measurement data of the gesture sensor (e.g. in reaction to detecting a particular gesture performed by the user).

In addition, the control unit is configured, in reaction to this, to cause a user interface for controlling the docking station to be displayed on the touch screen of the electronic device. The control unit may e.g. be configured to enable the user to control the volume for audio rendering and/or an activation of a virtual assistant using the user interface which is displayed on the touch screen of the electronic device. As a result of this, a comfortable and reliable user interaction with the docking station may be performed via the user interface which is displayed on the touch screen of the electronic device.

The control unit may be configured to cause the user interface for controlling the docking station to be displayed on the touch screen of the electronic device, if the presence of a user is detected based on the measurement data of the gesture sensor. On the other hand, the control unit may be configured to cause the user interface for controlling the docking station to be removed from the touch screen of the electronic device, if the absence of a user is detected based on the measurement data of the gesture sensor. By providing an automatic provision and/or removal of the user interface, the comfort of use may be further improved.

The control unit may be configured to determine a user input on the user interface which is displayed on the touch screen of the electronic device, in particular via a communication link between the docking station and the electronic device. The user interface may e.g. comprise one or more virtual input elements which can be actuated by the user to cause a user input for controlling the docking station. The docking station may be controlled in a reliable manner in dependence of the determined user input.

The docking station described herein may be designed to be placed on a table or a worktop within a kitchen. Furthermore, the docking station may be configured to hold a DIN A4 or DIN A5 sized electronic device (e.g. with a display size of up to 11 inches or 12 inches).

The docking station may be configured to communicate with an electronic device which is placed into a holder of the docking station (and which is docked to the docking station), notably for rendering an audio signal provided by the electronic device. The audio signal may be rendered using one or more (loud-) speakers or speaker drivers of the docking station.

In particular, the docking station may comprise a control unit which is configured to determine whether or not an electronic device has been placed in conjunction with, notably into (the holder of), the docking station. For this purpose, the docking station may comprise one or more presence sensors (e.g. a weight sensor) which are configured to detect the presence of an electronic device, notably the presence of an electronic device in a holder, such as a back support, of the docking station.

The control unit of the docking station may be configured to automatically establish a communication link with the electronic device, if it is determined that the electronic device has been placed in conjunction with, notably into the holder of, the docking station. By way of example, a wireless communication link, such as a Bluetooth link, may be established between the docking station and the electronic device. As a result of this, the electronic device may be docked with the docking station.

The docking station may comprise a main body, wherein the main body may exhibit a (circular) cylindrical form. The main body may exhibit a longitudinal axis which may be oriented in parallel to the ground (e.g. the worktop) onto which the docking station is placed. The main body may e.g. have a diameter between 4cm and 8cm. Furthermore, the main body may e.g. have a length along the longitudinal axis between 10cm and 25cm.

In addition, the docking station may comprise one or more feet extending downwards from the main body and enabling the main body to be placed on a ground (e.g. a worktop). The one or more feet may extend along the longitudinal axis of the main body (e.g. from one end to the other end of the main body). The docking station may exhibit a front foot at a front side of the docking station (facing the user of the docking station, when the user is using the docking station). Alternatively, or in addition, the docking station may exhibit a rear foot (at the rear side of the docking station). By providing one or more feet, the docking station may be placed on a ground in a stable manner.

The one or more feet may be configured to hold the main body elevated at an elevation distance from the ground. The elevation distance may e.g. be between 1cm and 15cm. By positioning the main body (which comprises one or more speaker drivers) at a certain elevation distance from the ground, a docking station having a high audio quality and intelligibility may be provided.

As indicated above, the (elevated) main body may comprise one or more (active or passive) speaker drivers for rendering an audio signal. The one or more speaker drivers are preferably oriented at least partially towards the ground. In particular, the one or more speaker drivers may be arranged such that a main emission direction of an audio signal that is emitted by the one or more speaker drivers is oriented towards the ground. By way of example, the main emission direction may form an angle with ground having a magnitude which is greater than 0°, notably greater than 20°.

According to a further aspect, a method for enhancing a user interaction with an appliance is described. The method comprises detecting a trigger event at the appliance, indicating that a user intends to obtain information regarding a function of the appliance. Furthermore, the method comprises causing the information regarding the function of the appliance to be output via a user interface separate from the appliance, in particular via a user interface of an electronic device or of a docking station that the electronic device is docked to.

According to another aspect, a method for controlling a docking station configured to dock an electronic device having a touch screen is described. The method comprises determining that the docking station has docked an electronic device. Furthermore, the method comprises determining that a user intends to control the docking station and in reaction to this, causing a user interface for controlling the docking station to be displayed on the touch screen of the electronic device.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows a (smart) docking station in a perspective view;
Figure 1b shows an example docking station in a side view;
Figure 1c shows a front view of the docking station;
Figures 2a to 2c illustrate an example docking station with a virtual menu;
Figures 3a to 3b show a system for providing information regarding a user interaction with a household appliance;
Figure 4a shows a flow chart of an example method for providing information regarding an appliance; and
Figure 4b shows a flow chart of an example method for providing a user interface for a docking station.

As outlined above, the present document is directed at increasing the comfort of use of a device, notably of a docking station and/or of a household appliance.

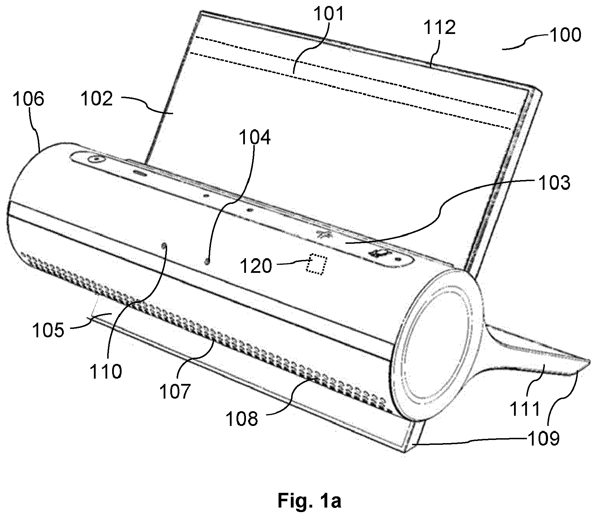

Figs. 1a to 1c show an example docking station 100. The (smart) docking station 100 comprises a main body 106, which may have a cylindrical form as illustrated in Fig. 1a. The main body 106 may comprise one or more electronic components such as a control unit 120, e.g. a microcontroller, of the docking station 100. Furthermore, the main body 106 may comprise a control panel 103 with one or more control elements, notably control buttons. The control panel 103 may enable a user to interact with the docking station 100, e.g. for speaker volume control or for quick touch interaction with the voice assistant (stop listening, start listening).

Alternatively, or in addition to a control panel 103, the docking station 100 may comprise a gesture sensor 104 (located e.g. on the main body 106), which is configured to sense gesture data regarding a (hand) gesture performed by a user of the docking station 100. The docking station 100 may be controlled in dependence of the gesture data (i.e. of the measurement data of the gesture sensor 104). In addition, the docking station 100 may comprise one or more light elements (not shown), notably light emitting diodes (LED), e.g. for providing status information regarding the status of the docking station 100 to a user of the docking station 100.

The main body 106 may further comprise one or more active speaker drivers (which are also referred to herein as loudspeakers) 108 which are configured to emit an audio signal. The one or more loudspeakers 108 may be located at a face side and/or at a shell surface of the (cylindrical) main body 106 or of the (cylindrical) acoustic chamber comprised within the main body 106. The main body 106 may act as and/or may enclose an acoustic chamber for improving the sound quality of the one or more loudspeakers 108. In addition, the docking station 100 may comprise one or more (passive) acoustic radiators 107 on the (cylindrical) surface of the main body 106 and/or at the one or more face sides of the main body 106.

The docking station 100 may comprise one or more base feet 105, 111, notably a base foot 105 at a front side facing the user and/or a rear foot 111 at a rear side of the docking station 100. The one or more base feet 105, 111 may be attached to the main body 106, and may extend from the main body 106 towards the ground, onto which the docking station 100 is placed. The one or more base feet 105, 111 may extend along the longitudinal axis of the (cylindrical) main body 106. In particular, the feet 105, 111 may have the form of a plate. As such the feet 105, 111 may be referred to herein as foot plates.

The one or more base feet 105, 111 may each comprise an isolator element 109, e.g. comprising silicone, at the end of the respective foot 105, 111, which is in contact with the ground that the docking station 100 is placed on. The use of an isolator element 109 allows the docking station 100 to be placed in a stable manner, preventing it from sliding over the surface that the docking station 100 is placed on (notably in case of touch interaction with the docking station 100 and/or when audio is played back). Furthermore, the docking station 100 may be isolated against (acoustic) vibrations.

In addition, the docking station 100 may comprise a holder, notably a back support, 102 which extends from the main body 106 upwards (i.e. away from the ground that the docking station 100 is placed on). The back support 102 may exhibit an angle with regards to the ground between 45° and 75°, when the docking station 100 is placed on the ground. The back support 102 may be designed as a support for a typical tablet PC (e.g. with a screen size between 8 inches and 13 inches), also being able to support smaller devices such as phones starting at 5 inches. The back support 102 may extend along the longitudinal axis of the main body 106 (from one face to the other face of the main body 106).

The back support 102 may exhibit one or more isolator stripes 101 which may extend horizontally across the back support 102, or may have at least two support pads. Furthermore, the back support 102 may comprise an isolator section 112 at the top end of the back support 102. The use of isolator stripes 101 and/or of an isolator section 112 allows an object, such as a tablet PC, to be placed onto the back support 102 in a stable manner. Furthermore, isolation of acoustic vibrations may be provided.

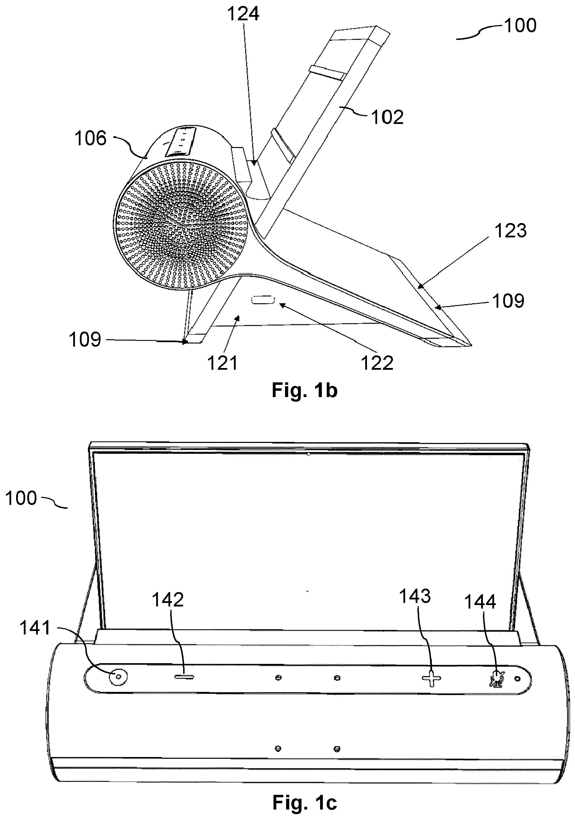

In addition, the docking station 100 may comprise a base support 124, as shown in Fig. 1b, which is located at the contact point between the main body 106 and the back support 102. The base support 124 may form a gap within which the lower edge of a user device, notably of a tablet PC, may be placed, in order to hold the user device in a stable manner on the back support 102. The base support 124 may comprise an isolating material, in order to allow vibrations of the docking station 100 (e.g. due to rending of an audio signal via a loudspeaker 108 of the docking station 100) to be isolated. Alternatively, or in addition, the base support 124 may comprise one or more presence sensors (e.g. weight sensors) for detecting the presence of a user device on the back support 102.

The control unit 120 of the docking station 100 may be configured to automatically establish a communication link with the user device, if it is determined that the user device has been placed in conjunction with, notably into the holder 102 of, the docking station 100. By way of example, a wireless communication link, such as a Bluetooth link, may be established between the docking station 100 and the user device.

Furthermore, the control unit 120 may be configured to receive an audio signal from the user device via the communication link, and to cause one or more speaker drivers 107, 108 of the docking station 100 to render the audio signal that has been received from the user device. Alternatively, or in addition, the control unit 120 may be configured to control the user device via the communication link (e.g. using gesture control and/or speech control).

The docking station 100 may comprise one or more microphones 110, e.g. at the main body 106, which are configured to capture acoustic microphone signals, notably speech signals, e.g. in order to enable speech control of the docking station 100 and/or of a user device (also referred to herein as electronic device) that is coupled with the docking station 100. The docking station 100, notably a control unit 120 of the docking station 100, may be configured to separate an audio signal that has been emitted by the docking station 100 from an acoustic microphone signal that has been captured by the one or more microphones 110 of the docking station 100, thereby enabling a reliable speech control, even when rendering an audio signal. The one or more microphones 110 may be oriented away from the one or more speakers 108 and/or the one or more radiators 107, for enabling a particularly reliable separation of an emitted audio signal from a captured microphone signal.

Figure 1b shows a side view of the docking station 100. The docking station 100 may comprise a housing 121 for one or more electronic components (e.g. for the control unit 120). The housing 121 may be located between the front foot 105 and the rear foot 111 of the docking station 100. Furthermore, the docking station 100 may comprise a data and/or power interface 122 (e.g. a USB interface) for data communication and/or for power supply (e.g. at the housing 121). In addition, the docking station 100 may comprise a section 123 for placing a power cord for a power supply of the docking station 100.

Figure 1c shows a front view of the docking station 100. The main body 106 of the docking station 100 may comprise various different (mechanical) input elements 141, 142, 143, 144 such as a control button 141 for activating or deactivating a virtual assistant, volume buttons 142, 143 and/or an on/off-button 144 for activating and for deactivating the one or more microphones 110.

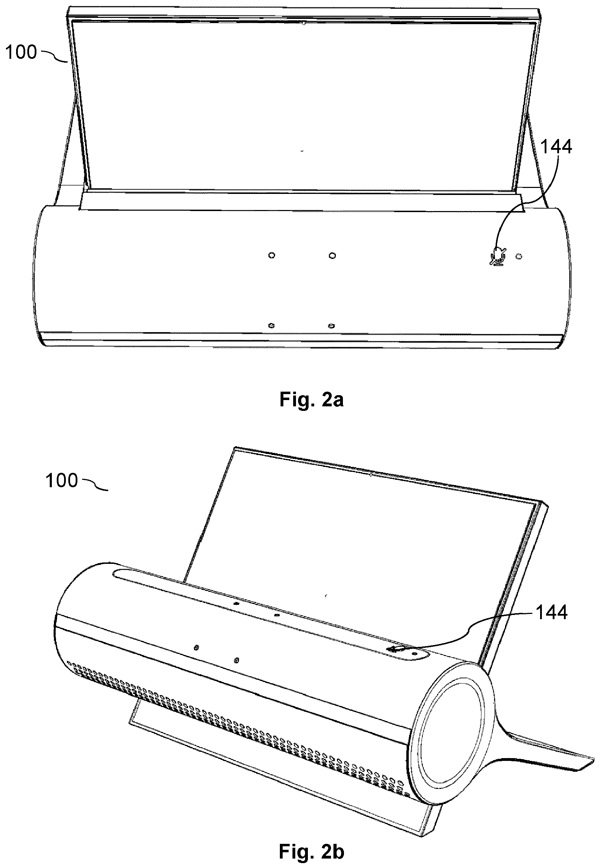

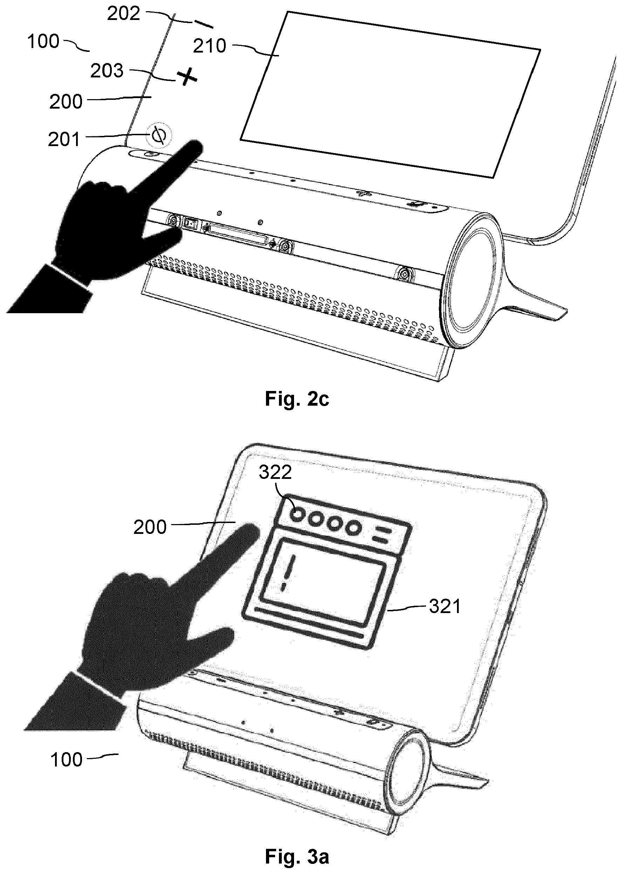

Figures 2a to 2c illustrates a docking station 100 with a reduced number of physical and/or mechanical input elements 141, 142, 143, 144. In particular, the control button 141 and the volume buttons 142, 143 have been removed, thereby increasing the robustness of the docking station 100 and reducing the cost of the docking station 100. Furthermore, Fig. 2c shows a user device 200 that has been placed in the holder 102 of the docking station 100. The user device 200 comprises a touch screen on which a virtual menu for controlling the docking station 100 is provided. The virtual menu comprises one or more virtual input elements 201, 202, 203 for controlling the docking station 100, e.g. a virtual control button 201 for activating a virtual assistant and/or virtual volume buttons 202, 203. The virtual menu may be displayed adjacent to other content 210 on the screen of the user device 200.

The control unit 120 of the docking station 100 may be configured to detect that a user is approaching the docking station 100. This may be detected based on measurement data provided by the gesture sensor 104. In reaction to this, the control unit 120 may cause the user device 200 to display the virtual menu on the screen of the user device 200. In particular, the control unit 120 may send a control signal to the user device 200 via the communication link between the docking station 100 and the user device 200, to cause the virtual menu to be displayed by the user device 200.

The user may then interact with the docking station 100 using the one or more virtual input elements 201, 202, 203 that are provided within the virtual menu on the touch screen of the user device 200. For this purpose, data may be exchanged between the user device 200 and the docking station 100 via the communication link.

Furthermore, the control unit 120 of the docking station 100 may be configured to detect that the user is moving away from the docking station 100. This may be detected using measurement data provided by the gesture sensor 104. In reaction to this, the control unit 120 may control the user device 200 to remove the virtual menu from the screen of the user device 200.

Hence, the number of input elements 141, 142, 143, 144 of a docking station 100 may be reduced. In particular, the volume-up button 143, the volume-down button 142 and the virtual assistant button 141 may be removed from the docking station 100 and may be placed in a virtual menu system on the screen of a user device 200 that is coupled with the docking station 100.

The control unit 120 of the docking station 100 may be configured to detect user presence and/or a (particular) user gesture. In reaction to this, the virtual menu may be provided on the touch screen of the user device 200, thereby enabling the user to interact with the docking station 100. The virtual menu may be hidden when it is detected that the user moves away from the docking station 100. By doing this, the overall design and the user interaction of the docking station 100 may be improved. Furthermore, the cost of the docking station 100 may be reduced. The virtual menu may comprise an extended list of virtual input elements 201, 202, 203 for further improving user interaction.

A household, in particular a kitchen, may comprise one or more household appliances, such as a dishwasher, an oven, a washing machine, a dryer, etc. A household appliance may comprise various different input elements for controlling the operation of the household appliance. A user of the household appliance may not be aware of all the different control settings which may be available within the household appliance. As a result of this, the user may need to read the user manual of the household appliance, in order to be able to interact correctly with the household appliance. This may be uncomfortable for the user.

Fig. 3a shows a user device 200 which is placed on a docking station 100. On the screen of the user device 200 a picture 321 of a household appliance may be displayed. The user may interact with the user device 200 in order to define one or more trigger events for the household appliance, which will cause the user device 200 and/or the docking station 100 to provide information regarding the household appliance. By way of example, the image 321 of the household appliance may comprise images 322 of the one or more input elements of the household appliance. The user may define as a trigger event the event that the user touches and/or actuates a particular input element of the household appliance. Hence, the user device 200 may be used to defined one or more trigger events which are related to user interactions with the household appliance. The trigger events may then be used for providing support to the user when interacting with the household appliance.

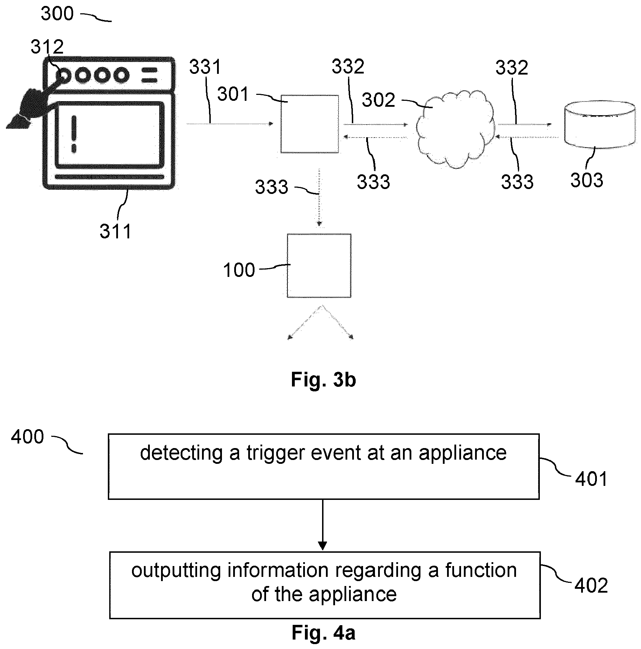

Fig. 3b shows an example system 300 for providing information regarding user interactions with and/or functions of a household appliance 311. The household appliance 311 may be coupled with a backend server 303 via a communication network 302. The backend server 303 may be configured to provide information regarding the user interface and/or functions of the household appliance 311. The household appliance 311 may be coupled to the backend server 303 via a software application 301 running on the user device 200.

The user device 200, notably the software application 301, may be configured to detect a trigger event 331 at the household appliance 311. By way of example, it may be detected as a trigger event 331 that a user interacts with a particular input element 312 of the household appliance 311. In reaction to this, a request 332 for information regarding the trigger event 331, in particular regarding the user interaction, and/or regarding a function of the appliance 311 may be passed to the backend server 303. The backend server 303 may reply to the request 332 by providing the requested information 333. The requested information 333 may be output by the user device 200 and/or by the docking station 100. The requested information 333 may e.g. indicate how the user may interact with the input element 312. As a result of this, the comfort of use of the household appliance 200 may be increased.

Hence, means for accessing information 333 about a particular function of a connected appliance 311, notably via a docking station 100, are described. If a user wishes to know more about a (new) feature or function of the appliance 311, the user may be enabled to program which button or interaction 312 of the appliance 311 he wants to use as an information trigger 331. The user may have access to a user device 200 which is coupled with the docking station 100. The user device 200 may be connected to a backend server 303 of the manufacturer of the appliance 311. As soon as the user activates a particular interaction (i.e. a trigger) with the appliance 311, an associated request 332 is sent to the backend server 303. The information 333 regarding a particular function/feature provided by the backend server 303 may be output by the user device 200 and/or by the docking station 100 (e.g. as audio output and/or visual output). Hence, a method for accessing information regarding a particular feature or function of an appliance 311 in an efficient and comfortable manner is provided.

In other words, a system 300 comprising a connected appliance 311 is described. The appliance 311 may be a major or small domestic appliance. Furthermore, the system 300 may comprise a user device 200 and/or a docking station 100 with a holder 102 for holding the user device 200. The user device 200 may be connected with a (backend) server 303 via a communication network 302. The user device 200 may be used to program one or more trigger events 331 for the appliance 311. Data regarding the trigger events 331 may be stored on the server 303. A trigger event 331 may be associated with a user interaction and/or an input element 312 of the appliance 311. Furthermore, a trigger event 331 may be associated with information 333 that is to be provided when the trigger event 331 is detected. An example trigger event 331 is a "long press" (e.g. 3sec or more) on a knob 312 of the appliance 311. The one or more trigger events 331 may be stored on the server 303 via the application 301 of the user device 200.

If the user wishes to receive information 333 about a particular feature or function of the appliance 311, the user causes a trigger event 331 at the appliance 311 (e.g. a long press on the knob 312). This causes the requested information 333 to be downloaded from the server 303 to the application 301 of the user device 200. The information 333 may be output on the screen of the user device 200 and/or via a speaker 108 of the docking station 100.

Removing the user device 200 from the docking station 100 may cause the trigger functionality for the appliance 311 to be disabled. In other words, the trigger functionality may only be provided on the user device 200, if the user device 200 is coupled with the docking station 100. This may be indicated to the user, e.g. using a sound or vibration and/or using a prompt to the user to place the user device 200 onto the docking station 100.

By making use of trigger events 331, functional information about a device 311 may be accessed in a comfortable manner, without the need to read a printed or digital user guide. Furthermore, the integration of a help menu on a device 311 may be avoided, thereby reducing hardware and software requirements.

Fig. 4a shows a flow chart of an example (possibly computer-implemented) method 400 for enhancing a user interaction with an appliance 311, notably a household and/or kitchen appliance. The method 400 comprises detecting 401 a trigger event 331 at the appliance 311, indicating that a user intends to obtain information 333 regarding a function of the appliance 311. The trigger event 331 may be pre-defined by a user of the appliance 311. The trigger event 331 may comprise actuation of an input element 312 of the appliance 311.

Furthermore, the method 400 comprises causing 402 the information 333 regarding the function of the appliance 311 to be output via a user interface separate from the appliance 311. In particular, a user interface of an electronic device 200 (e.g. a smartphone or tablet PC) or of a docking station 100 that the electronic device 200 is docked to may be used for outputting the information 333. The information 333 may comprise content from a user manual of the appliance 311. Furthermore, the information 333 may relate to the input element 312 of the appliance 311 which was actuated by the user to cause the trigger event 331.

By making use of a user interface separate from the appliance 311, a particularly efficient and comfortable user interaction with the appliance 311 may be provided.

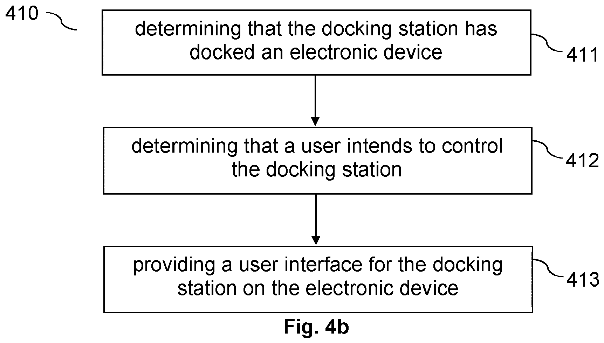

Fig. 4b shows a flow chart of a (computer implemented) method 410 for controlling a docking station 100 which is configured to dock an electronic device 200, e.g. a smartphone or a tablet PC, having a touch screen. The method 410 comprises determining 411 that the docking station 100 has docked an electronic device 200. In particular, it may be determined that an electronic device 200 has been placed on the holder 102 of the docking station 100.

Furthermore, the method 410 comprises determining 412 that a user intends to control the docking station 100. This may be determined based on the measurement data of a gesture sensor 104 of the docking station 100.

The method 410 further comprises, in reaction to determining 412 that a user intends to control the docking station 100, causing 413 a (virtual) user interface for controlling the docking station 100 to be displayed on the touch screen of the electronic device 200. Hence, the electronic device 200 may be used to provide a particularly comfortable user interface for the docking station 100 in an efficient manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. An electronic device (200) configured to enhance a user interaction with an appliance (311); wherein the electronic device (200) is configured to
- detect a trigger event (331) at the appliance (311), indicating that a user intends to obtain information (333) regarding a function of the appliance (311); and
- cause the information (333) regarding the function of the appliance (311) to be output via a user interface separate from the appliance (311), in particular via a user interface of the electronic device (200) or of a docking station (100) that the electronic device (200) is docked to.

2. The electronic device (200) of claim 1, wherein the electronic device (200) is configured to
- determine whether or not the electronic device (200) is docked to a docking station (100); and
- cause the information (333) regarding the function of the appliance (311) to be output, if, in particular only if, it is determined that the electronic device (200) is docked to the docking station (100).

3. The electronic device (200) of any of the claims, wherein the electronic device (200) is configured to cause the information (333) regarding the function of the appliance (311) to be output using a loudspeaker (108) of the docking station (100) that the electronic device (200) is docked to, in particular using text-to-speech synthesis.

4. The electronic device (200) of any previous claims, wherein
- the appliance (311) comprises an input element (312); and
- the trigger event (331) comprises an actuation of the input element (312) by the user.

5. The electronic device (200) of claim 4, wherein the information (333) regarding the function of the appliance (311) is related to a function of the appliance (311), which is controllable using the input element (312) of the appliance (311).

6. The electronic device (200) of any previous claims, wherein the electronic device (200) is configured to download the information (333) regarding the function of the appliance (311) from a backend server (303), in particular from a backend server (303) of a manufacturer of the appliance (311).

7. The electronic device (200) of any previous claims, wherein the electronic device (200) is configured to enable the user to define one or more different trigger events (331), subject to which information (331) regarding one or more different functions of the appliance (331) is output.

8. A control unit (120) for a docking station (100) configured to dock an electronic device (200) having a touch screen; wherein the control unit (120) is configured to
- determine that the docking station (100) has docked an electronic device (200);
- determine that a user intends to control the docking station (100); and
- in reaction to this, cause a user interface for controlling the docking station (100) to be displayed on the touch screen of the electronic device (200).

9. The control unit (120) of claim 8, wherein
- the docking station (100) comprises a gesture sensor (104) configured to capture measurement data regarding the presence or the absence of a user in front of the docking station (100); and
- the control unit (120) is configured to determine that a user intends to control the docking station (100) based on the measurement data of the gesture sensor (104).

10. The control unit (120) of claim 9, wherein the control unit (120) is configured to
- cause the user interface for controlling the docking station (100) to be displayed on the touch screen of the electronic device (200), if the presence of a user is detected based on the measurement data of the gesture sensor (104); and/or
- cause the user interface for controlling the docking station (100) to be removed from the touch screen of the electronic device (200), if the absence of a user is detected based on the measurement data of the gesture sensor (104).

11. The control unit (120) of any of claims 8 to 10, wherein the control unit (120) is configured to
- determine a user input on the user interface which is displayed on the touch screen of the electronic device (200), in particular via a communication link between the docking station (100) and the electronic device (200); and
- control the docking station (100) in dependence of the user input.

12. The control unit (120) of any of claims 8 to 11, wherein the user interface comprises one or more virtual input elements (201, 202, 203) which can be actuated by the user to cause a user input for controlling the docking station (100).

13. The control unit (120) of any of claims 8 to 11, wherein the control unit (120) is configured to enable the user to control a volume for audio rendering and/or an activation of a virtual assistant using the user interface which is displayed on the touch screen of the electronic device (200).

14. A method (400) for enhancing a user interaction with an appliance (311); wherein the method (400) comprises
- detecting (401) a trigger event (331) at the appliance (311), indicating that a user intends to obtain information (333) regarding a function of the appliance (311); and
- causing (402) the information (333) regarding the function of the appliance (311) to be output via a user interface separate from the appliance (311), in particular via a user interface of an electronic device (200) or of a docking station (100) that the electronic device (200) is docked to.

15. A method (410) for controlling a docking station (100) configured to dock an electronic device (200) having a touch screen; wherein the method (410) comprises
- determining (411) that the docking station (100) has docked an electronic device (200);
- determining (412) that a user intends to control the docking station (100); and
- in reaction to this, causing (413) a user interface for controlling the docking station (100) to be displayed on the touch screen of the electronic device (200).

## Amended claims

### Amended claims in accordance with Rule 137(2) EPC.

1. An electronic device (200) configured to enhance a user interaction with an appliance (311); wherein the electronic device (200) is configured to
- detect a trigger event (331) at the appliance (311), indicating that a user intends to obtain information (333) regarding a function of the appliance (311); and
- cause the information (333) regarding the function of the appliance (311) to be output via a user interface separate from the appliance (311),
- **characterized in that**
- the user interface comprises a user interface of a docking station (100) that the electronic device (200) is docked to and
- the electronic device (200) is configured to cause the information (333) regarding the function of the appliance (311) to be output using a loudspeaker (108) of the docking station (100) that the electronic device (200) is docked to.

2. The electronic device (200) of claim 1, wherein the electronic device (200) is configured to
- determine whether or not the electronic device (200) is docked to a docking station (100); and
- cause the information (333) regarding the function of the appliance (311) to be output, if, in particular only if, it is determined that the electronic device (200) is docked to the docking station (100).

3. The electronic device (200) of any of the claims, wherein the electronic device (200) is configured to cause the information (333) regarding the function of the appliance (311) to be output using the loudspeaker (108) of the docking station (100) using text-to-speech synthesis.

4. The electronic device (200) of any previous claims, wherein
- the appliance (311) comprises an input element (312); and
- the trigger event (331) comprises an actuation of the input element (312) by the user.

5. The electronic device (200) of claim 4, wherein the information (333) regarding the function of the appliance (311) is related to a function of the appliance (311), which is controllable using the input element (312) of the appliance (311).

6. The electronic device (200) of any previous claims, wherein the electronic device (200) is configured to download the information (333) regarding the function of the appliance (311) from a backend server (303), in particular from a backend server (303) of a manufacturer of the appliance (311).

7. The electronic device (200) of any previous claims, wherein the electronic device (200) is configured to enable the user to define one or more different trigger events (331), subject to which information (331) regarding one or more different functions of the appliance (331) is output.

8. A system comprising a docking station (100) configured to dock an electronic device (200) having a touch screen and comprising an electronic device (200) according to any previous claims; wherein the docking station (100) comprises a control unit (120), which is configured to
- determine that the docking station (100) has docked the electronic device (200);
- determine that a user intends to control the docking station (100); and
- in reaction to this, cause a user interface for controlling the docking station (100) to be displayed on the touch screen of the electronic device (200);
- **characterized in that**
- the docking station (100) comprises a loudspeaker (108); and
- the electronic device (200) is configured to detect a trigger event (331) at an appliance (311), indicating that a user intends to obtain information (333) regarding a function of the appliance (311); and is configured to cause the information (333) regarding the function of the appliance (311) to be output using the loudspeaker (108) of the docking station (100).

9. The system of claim 8, wherein
- the docking station (100) comprises a gesture sensor (104) configured to capture measurement data regarding the presence or the absence of a user in front of the docking station (100); and
- the control unit (120) is configured to determine that a user intends to control the docking station (100) based on the measurement data of the gesture sensor (104).

10. The system of claim 9, wherein the control unit (120) is configured to
- cause the user interface for controlling the docking station (100) to be displayed on the touch screen of the electronic device (200), if the presence of a user is detected based on the measurement data of the gesture sensor (104); and/or
- cause the user interface for controlling the docking station (100) to be removed from the touch screen of the electronic device (200), if the absence of a user is detected based on the measurement data of the gesture sensor (104).

11. The system of any of claims 8 to 10, wherein the control unit (120) is configured to
- determine a user input on the user interface which is displayed on the touch screen of the electronic device (200), in particular via a communication link between the docking station (100) and the electronic device (200); and
- control the docking station (100) in dependence of the user input.

12. The system of any of claims 8 to 11, wherein the user interface comprises one or more virtual input elements (201, 202, 203) which can be actuated by the user to cause a user input for controlling the docking station (100).

13. The system of any of claims 8 to 11, wherein the control unit (120) is configured to enable the user to control a volume for audio rendering and/or an activation of a virtual assistant using the user interface which is displayed on the touch screen of the electronic device (200).

14. A method (400) for enhancing a user interaction with an appliance (311) using an electronic device (200), which is docked to a docking station (100); wherein the method (400) comprises
- detecting (401) a trigger event (331) at the appliance (311), indicating that a user intends to obtain information (333) regarding a function of the appliance (311); and
- causing (402) the information (333) regarding the function of the appliance (311) to be output via a user interface separate from the appliance (311); **characterized in that** said step of causing the information to be output comprises
- causing, by the electronic device (200), the information (333) regarding the function of the appliance (311) to be output using a loudspeaker (108) of the docking station (100) that the electronic device (200) is docked to.
